# EUROPEAN PATENT SPECIFICATION

(11) **EP 3 690 599 B1**
(45) Date of publication and mention of the grant of the patent: **11.02.2026**
(21) Application number: 20150692.0
(22) Date of filing: 08.01.2020
(51) Int. Cl.: G06F 1/16, H04M 1/02

(54) **SCREEN FRAME, DISPLAY SCREEN MODULE AND TERMINAL**
BILDSCHIRMRAHMEN, ANZEIGEBILDSCHIRMMODUL UND ENDGERÄT
CADRE D'ÉCRAN, MODULE D'ÉCRAN D'AFFICHAGE ET TERMINAL

(30) Priority: 31.01.2019 CN 201910101420
(43) Date of publication of application: 05.08.2020
(73) Proprietor: Beijing Xiaomi Mobile Software Co., Ltd., Beijing 100085 (CN)
(72) Inventor: YEN, Chiafu, Beijing, Beijing 100085 (CN)
(74) Representative: dompatent

(56) References cited:
- EP-A1- 2 472 832
- EP-A1- 2 584 767
- EP-A1- 3 396 588
- CN-A- 107 241 466
- CN-A- 108 255 349
- US-A1- 2018 107 312
- US-A1- 2019 235 653

## Description

### TECHNICAL FIELD

The present disclosure relates to the field of electronic device technologies, and in particular, to a screen frame, a display screen module, and a terminal.

### BACKGROUND

A screen frame is an important component in a terminal equipment and is used for fixing a screen and function modules around the screen. Typically, the screen frame is an opaque structure to shield portions of the terminal other than a display screen. Therefore, when the function modules include an optical sensor, the function modules are provided on the screen frame through an opening to guarantee the normal use of the optical sensor.

CN 108 255 349 A and US 2019/235653 A1 disclose a display panel and a manufacturing method thereof. The display panel is provided with a function hole, the display panel includes a substrate; and a laminated structure for the function hole formed on a substrate; the laminated structure includes a light blocking layer, a semi-transparent layer and a shadow removing layer, the shadow removing layer is provided between the light blocking layer and the semi-transparent layer, and at least entirely covers the function hole. For the display panel, the L value of the semi-transparent ink or blacking ink at the function hole is increased by additionally providing the shadow removing layer at the function hole, reducing the chromatic aberration between the screen printed semi-transparent layer and the light blocking layer at the function hole.

EP 2 472 832 A1 discloses a mobile terminal including a window having an opaque region, which includes a transparent substrate, a first layer formed on one surface of the substrate and having a color, and a second layer formed on one surface of the first layer and configured to reflect light incoming through the first layer and light outgoing from the inside.

EP 2 584 767 A1 discloses a protective panel for a display device including a substrate and a light-blocking layer provided over the substrate. A display window is defined on a region of the substrate where the light-blocking layer is not provided. The light-blocking layer includes a first layer which comprises a first material having a first color. The protective panel further includes a hole formed through the light-blocking layer. The hole having an inner sidewall, which is clad with a cladding material having a color different from the first color.

### SUMMARY

The present disclosure provides a screen frame, a display screen module and a terminal. The invention is set out in the appended set of claims.

According to the present invention, a terminal is provided according to claim 1.

The technical solution provided by the embodiment of the present disclosure can include the following beneficial effects:
the terminal comprising the screen frame provided by the embodiment of the present disclosure enables light to penetrate through the light-transmitting member. Therefore, when the screen frame is matched with the optical sensor, the light penetrating through the light-transmitting piece can be received by the optical sensor so as to maintain the use of the optical sensor. Moreover, the light-transmitting member plays a certain shielding role in absorbing or reflecting light, realizing the shielding effect of the frame. The screen frame used in the embodiment of the present disclosure reduces the opening on the screen frame through the light-transmitting member, improves the structural stability of the screen frame, and simplifies the manufacturing process.

### BRIEF DESCRIPTION OF THE DRAWINGS

The accompanying drawings, which are incorporated in the specification and constitute a part of the specification, show exemplary embodiments of the present disclosure. The drawings along with the specification explain the principles of the present disclosure.
FIG. 1 is a schematic diagram of a screen frame in the related art;
FIGS.2-4 are schematic diagrams showing structures of screen frames according to various exemplary embodiments of the present disclosure;
FIG. 5 is a schematic diagram showing a principle of use of a light-transmitting member according to an exemplary embodiment.
FIGS.6-8 are schematic diagrams showing structures of light-transmitting members according to various embodiments;
FIG. 9 is a schematic diagram showing a structure of a display screen module according to an exemplary embodiment;
FIG. 10 is a schematic diagram showing a structure of a terminal according to an exemplary embodiment.

### DETAILED DESCRIPTION

Exemplary embodiments will be described in detail herein, examples of which are illustrated in the accompanying drawings. The following description refers to the same or similar elements in the different figures unless otherwise indicated. The embodiments described in the following exemplary embodiments do not represent all embodiments consistent with the present disclosure. Instead, they are merely examples of devices and methods consistent with aspects of the disclosure as detailed in the appended claims.

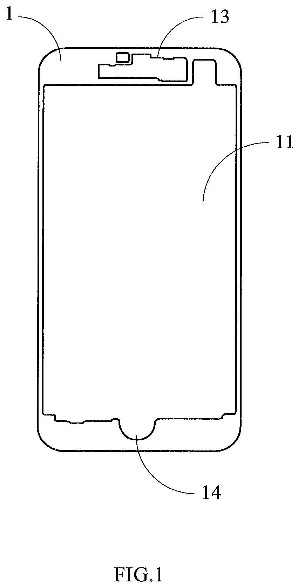

FIG. 1 is a schematic diagram of a screen frame provided in the related art.

Generally, when assembling a terminal device, a display screen and function modules are mounted on a screen frame. Since an internal structure of the terminal needs to be shielded, the whole screen frame is opaque. However, when an optical function module is installed, it is necessary to ensure smooth light passing, so the screen frame in the related art has the following structural features:
as shown in FIG. 1, the screen frame 1 includes four sides, the four sides are enclosed to form the mounting region 11 where the display screen is mounted. The screen frame 1 is provided with a hole 12, and a groove 13 is formed at the edge of the screen frame 1. The function modules are mounted at the hole 12 and the groove 13.

By removing a part of the screen frame 1, a mounting region for the function modules, in particular the function module with an optical sensor, is formed, whereby light can be directly received by the optical sensor without penetrating the screen frame 1.

When using the screen frame provided in the related art, the inventors found that:
Since the screen frame 1 is provided with a hole 12 or a groove 13 formed at the edge of the screen frame 1, the problems of stress concentration and the like are easy to occur, which affects the structural stability of the screen frame. Moreover, for the mounting stability, the hole 12 and the groove 13 usually have a plurality of layers in the thickness direction of the screen frame 1, for example, the hole 12 is a variable-diameter hole along the thickness direction of the screen frame 1. Therefore, the manufacture difficulty of the screen frame 1 is increased, and the equipment cost is increased.

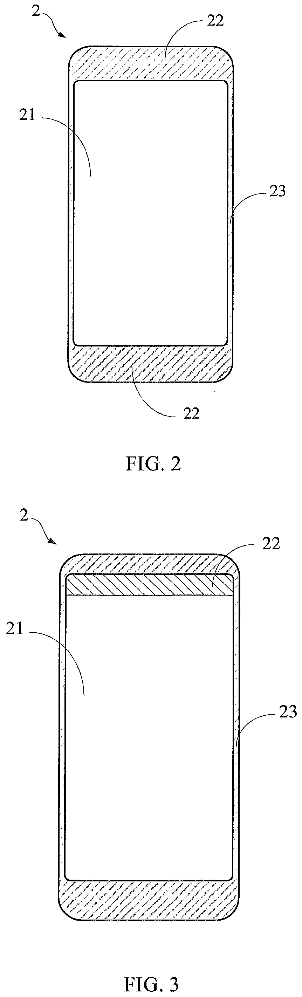

Based on the above problems, an embodiment of the present disclosure provides a screen frame. FIG.2 is a schematic diagram showing a structure of a screen frame according to an exemplary embodiment, and FIG.3 is a schematic diagram showing a principle of a use state of a screen frame according to an exemplary embodiment.

As shown in FIG.2, the screen frame 2 provided by the embodiment of the present disclosure is formed with a mounting region 21 for mounting a screen. Optionally, the shape of the mounting region 21 is adapted to a shape of the display screen to be mounted.

The screen frame 2 also includes a light-transmitting member 22. As for the arrangement position of the light-transmitting member 22, as shown in FIG.2, the light-transmitting member 22 is optionally located on at least one side edge of the screen frame. For example, the light-transmitting member 22 is located at the edge of the upper end of the screen frame 2. When assembled in the terminal, a light-transmitting strip or aperture on the display surface is formed by the light-transmitting member 22.

Further, the light-transmitting member 22 is optionally a part of the screen frame 2. For example, the light-transmitting member 22 is located on at least one side of the screen frame 2 in the longitudinal direction. Alternatively, the screen frame 2 as a whole is optionally a light-transmitting member 22. Alternatively, the screen frame 2 further includes a support member 23 connected to the light-transmitting member 22, and the light-transmitting member 22 and the support member 23 are connected to form the mounting region 21.

Optionally, the light-transmitting member 22 is provided at a light transmitting region of the screen frame. Wherein, the implementation modes of the light-transmitting region includes following:

As an implementation mode, the light-transmitting region is an opening region in the screen frame 2. First, it should be noted that openings are usually required to be respectively corresponding to different optical sensors on the screen frame in the related art. However, when the screen frame 2 provided by the embodiment of the present disclosure is adopted, the opening with a larger size may be optionally provided, so that the opening corresponds to a plurality of optical sensors. Hereby, the number of the openings in the screen frame 2 is also reduced.

In particular, as a preferable example, as shown in FIG. 3, the mounting region 21 for mounting the screen in the screen frame 2 includes the light-transmitting region. The mounting region 21 may optionally have a size larger than the screen to be mounted, and a portion of the mounting region 21 beyond the screen to be mounted forms a light-transmitting region. Accordingly, the transparent region is formed by the necessary mounting region 21 in the screen frame 2, and the number of the openings in the screen frame 2 is further reduced.

In this way, the screen frame 2 itself optionally does not include a light-transmitting material. For example, the screen frame 2 is a metal frame, a ceramic frame, or the like.

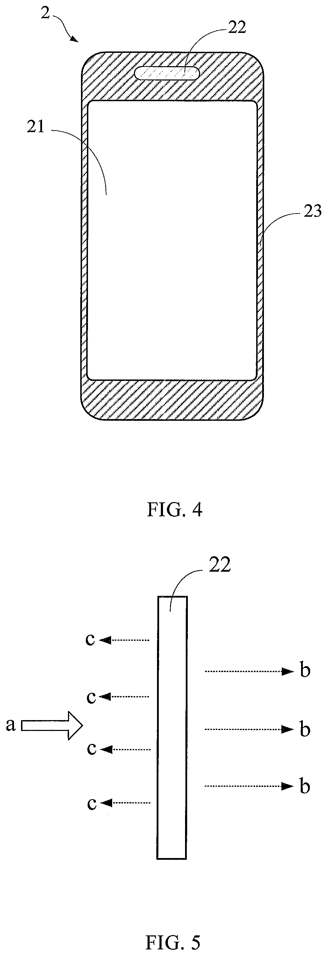

As an implementation mode, as shown in FIG. 4, the light-transmitting region is a region formed by light-transmitting material in the screen frame 2. For example, the screen frame 2 includes a transparent substrate and an opaque film layer coated on the transparent substrate, and the transparent substrate of the screen frame 2 forms the light-transmitting region in a region where the opaque film layer is not provided.

It is understood that the light-transmitting member 2 provided in the light-transmitting region of the screen frame 2 can allow light to pass. Therefore, even if the optical sensor is placed below the light-transmitting member 22, the optical sensor can be maintained in operation with the light penetrating the light-transmitting member 22.

In other words, the screen frame 2 satisfies the use requirement of the optical sensor matched with the screen frame 2 on the premise of maintaining the structural integrity, thereby the structural stability of the screen frame 2 is optimized and the manufacturing process thereof is simplified.

Further, the light-transmitting member 22 has the ability to absorb or reflect light, and by absorbing or scattering light, the light flux passing through the light-transmitting member 22 is made smaller than the light flux of incident light in the same direction. Thus, the light-transmitting member 22 can shield the structure below the light-transmitting member 2, and has the shielding performance of the screen frame at the same time.

Further, the light-transmitting member 22 has an absorption or reflection rate for incident light greater than a transmittance rate for incident light. Therefore, the shielding performance of the light-transmitting member 22 is further enhanced, the appearance of the terminal is optimized, and the requirements of users are met.

For example, when the light-transmitting member 22 absorbs the incident light, among the light incident on the side of the light-transmitting member 22, the light intensity of the light penetrating the light-transmitting member 22 is weaker than the light intensity of the light absorbed by the light-transmitting member 22. It can be understood that when one side of the light-transmitting member 22 has high ambient light brightness and another side has low ambient light brightness, it is difficult to observe one side of the light-transmitting member 22 from another side of the light-transmitting member 22 with the high ambient light brightness, that is, the shielding performance of the light-transmitting member 22 is realized

In addition, in this case, the light-transmitting member 22 may optionally be a heat-insulating film.

For example, when the light-transmitting member 22 reflects the incident light, referring to FIG. 5, the light a is incident from one side of the light-transmitting member 22, the first light b among the light a passes through the light-transmitting member 22, and the second light c among the light a is reflected by the light-transmitting member 22. Since the reflection rate of the light-transmitting member 22 is greater than the transmittance rate, the intensity of the second light c is greater than that of the first light b. It can be understood that when one side of the light-transmitting member 22 has high ambient light brightness and another side has low ambient light brightness, it is difficult to observe one side of the light-transmitting member 22 from another side of the light-transmitting member 22 with the high ambient light brightness, that is, the shielding performance of the light-transmitting member 22 is realized.

Moreover, the light-transmitting member 2 can present a mirror image at the side with the high ambient light brightness through the reflected second light c. For example, when the screen frame is applied to the terminal device, the screen frame 2 presents a mirror image at the external environment of the terminal through the second light c reflected by the light-transmitting member 22, further blocking the user experience brought by the screen frame.

In addition, in this case, the light-transmitting member 22 may be a peep-hole lens, by applying the characteristic that intensity of the ambient light inside the terminal is weak, the screen frame 2 can maintain an intact structure with light-transmitting performance and shielding performance.

It should be noted that, in general, the screen frame 2 is applied to a terminal, and one side of the screen frame 2 faces the inside of the terminal. Obviously, the ambient light intensity inside the terminal is significantly weaker than the ambient light intensity of the service space outside the terminal. Therefore, in such a case, the screen frame 2 provided by the present disclosure has the light-transmitting performance and the shielding performance with the light-transmitting member 22.

As such, the screen frame 2 provided by the embodiment of the disclosure improves the integrity of the structure with the light-transmitting member 22 while realizing the original function of the screen frame, reduces the structures such as the light-transmitting holes and the grooves formed on the screen frame 2, and is beneficial to improving the structural stability of the screen frame, and simplifying the processing process of the screen frame 2.

In addition, it should be noted that, in the embodiment of the present disclosure, the specific characterization index of the light intensity is not limited, such as illuminance, power, and the like.

In one embodiment, the light-transmitting member 22 includes: a transparent substrate 221, and a light-transmitting shielding layer 222 provided on the transparent substrate 221. Among the light incident on the side of the light-transmitting member 22, the light-transmitting shielding layer 222 allows a part of the light to pass, and a part of the light to be reflected or absorbed, realizing the shielding performance and the light-transmitting performance of the light-transmitting member 22. Wherein, the transparent substrate 221 and the light-transmitting shielding layer 222 have the following optional arrangement.

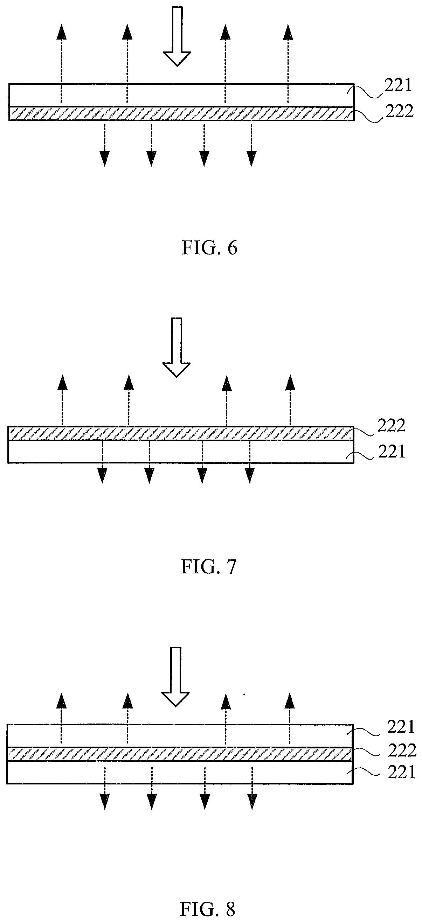

In the first arrangement, as shown in FIG. 6, the light-transmitting shielding layer 222 is coated on the surface of the side of the transparent substrate 221 facing away from the optical sensor. Accordingly, the light-transmitting shielding layer 222 is directly exposed to the outside, and incident light can be reflected or absorbed without penetrating the transparent substrate 221.

In the second arrangement, as shown in FIG. 7, the light-transmitting shielding layer 222 is coated on the surface of the side of the transparent substrate 221facing the optical sensor.

In this case, when the light-transmitting shielding layer 222 realizes the shielding effect mainly by reflecting the light, the light reflected by the light-transmitting shielding layer 222 passes through the transparent substrate 221 and exits from the light-transmitting member 22. Accordingly, the transparent substrate 221 is optionally a transparent substrate having a predetermined color. Further, the light-transmitting member 22 exhibits a predetermined color by the reflection of the light-transmitting shielding layer 222, enriching the display effect of the screen frame 2.

And, when the screen frame 2 is applied to a terminal, the transparent substrate 221 faces the outside of the terminal, the light-transmitting shielding layer 222 is located inside the terminal, and the light-transmitting shielding layer 222 is protected from interference by the transparent substrate 221.

In an embodiment according to the invention, as shown in FIG. 8, the light-transmitting shielding layer 222 is formed inside the transparent substrate 221. According to the invention, the light-transmitting member 22 includes two transparent substrates 221 provided opposite to each other, and the light-transmitting shielding layer 222 is provided between the two transparent substrates 221. The transparent substrate 221 ensures that both sides of the light-transmitting shielding layer 222 located inside and outside of the terminal is from interference respectively, and is stably provided inside the transparent substrate 221.

Optionally, the transparent substrate 221 on the side of the light-transmitting shielding layer 222 facing away from the optical sensor is a colored transparent body having the predetermined color, so that the light-transmitting member 22 exhibits a predetermined color.

In the present embodiment, the transparent substrate 221 may be selected from a glass substrate, a resin substrate, and the like. The light-transmitting shielding layer 222 may be selected from a resin film layer, a paint layer, a metal layer, or the like. Optionally, the light-transmitting shielding layer 222 is formed on the transparent substrate 221 by plating, spraying, injection molding, or the like. In particular, when the transparent substrate 221 and the light-transmitting shielding layer 222 are both resin materials, the light-transmitting member 22 may be manufactured by a two-material injection molding integral process.

Of course, in another embodiment, the light-transmitting member 22 has a single-layer structure, for example, the light-transmitting member 22 is a translucent resin plate member or the like.

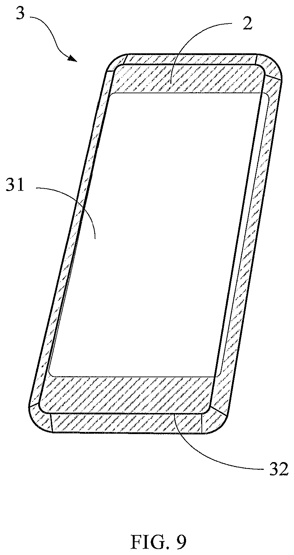

In a second aspect, the embodiment of the disclosure provides a display screen module. As shown in FIG. 9, the display screen module 3 includes: a cover plate 32 and the screen frame 2 provided in the above first aspect. Moreover, the display screen module 3 further includes a display screen 31 mounted in the mounting region 21 of the screen frame 2, such as by embedding or gluing. The cover plate 32 is overlaid on the display screen 31 and the screen frame 2.

Alternatively, the cover plate 32 may include a first cover plate covering the screen frame 2 and a second cover plate covering the display screen 31. Wherein the light-transmitting member 22 is optionally formed on the first cover plate. In such a case, it is necessary to make the portion of the screen frame 2 corresponding to the light-transmitting member 22 be a light-transmitting region.

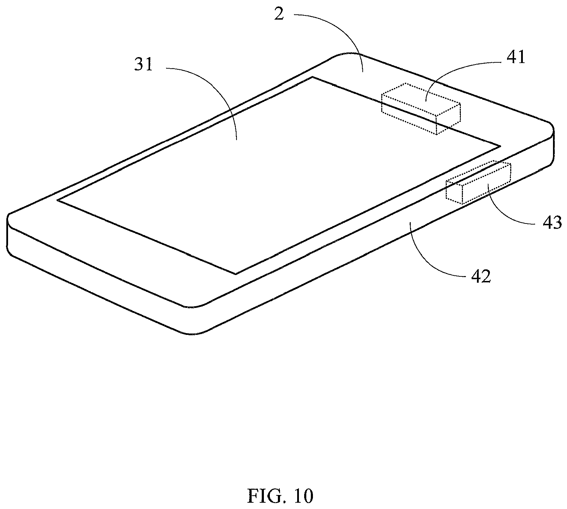

In a third aspect, and according to the present invention, the embodiment of the present disclosure provides a terminal. As shown in FIG. 10, the terminal 4 includes an optical sensor 41, and the screen frame 2 provided in the first aspect or the display screen module 3 provided in the second aspect. The optical sensor 41 is provided correspondingly to the light-transmitting member 22 of the screen frame 2.

According to the explanation of the first aspect, the light-transmitting member 22 in the screen frame 2 has both the light-transmitting function and the shielding function, so that the optical sensor 41 located below the light-transmitting member 22 in the embodiment of the disclosure can also receive and emit light signals. Further, the optical sensor 41 below the light-transmitting member 22 is hard to be observed from the outside of the terminal 4, thereby providing privacy shielding. And this screen frame 2 has the less quantity and even need not to set up structures such as light trap, groove, which optimizes the structural stability of screen frame 2, and simplifies the manufacture flow of screen frame 2.

According to the present invention, the terminal 4 includes at least two optical sensors 41, and the light-transmitting member 22 covers light sensing surfaces of the at least two optical sensors 41. By providing one light-transmitting member 22, the normal operations of the plurality of optical sensors 41 can be met to reduce the number of the openings in the structure of the terminal.

In one embodiment, the terminal 4 further includes a light-transmitting side 42. Optionally, the side edge 42 is a part of the rear cover of the terminal. For example, the edge of the rear cover extends upward to form the side 42. At this time, the rear cover is also a transparent component, such as an acrylic rear cover.

Optionally, the side 42 is an individual component of the terminal 4, which is connected to the rear cover and the screen frame 2 when assembled.

Moreover, the light-transmitting member 22 described in the first aspect is provided inside the side edge 42. It should be noted that, in the present embodiment, the light-transmitting member 22 optionally includes a transparent substrate 221 and a light-transmitting shielding layer 222 provided on the transparent substrate 221. Alternatively, the light-transmitting member 22 optionally includes only the light-transmitting shielding layer 222, and at this time, the light-transmitting shielding layer 222 is supported by the light-transmitting side 42 instead of the transparent substrate 221.

Further, the terminal 4 further includes an optical sensor 43 provided corresponding to the light-transmitting member 22 located on the side 42. Accordingly, the light-transmitting side 42 and the light-transmitting member 22 enable the side 42 of the terminal 4 to achieve the matching with the optical sensor 43 while maintaining the side structure intact. Moreover, the current terminal exhibits the feature of being light and thin, and the thickness of the side of the terminal is small. In such a case, the structural stability of the side is improved since it is not necessary to provide a light-transmitting hole at the side 42, thereby the stability and durability of the overall structure of the terminal is optimized.

In the terminal provided by the embodiment of the present disclosure, the optical sensors (41 and 43) may be selected from sensors in any of the following function modules: a structured light module, an optical fingerprint recognition module, and an optical distance monitoring module.

Different functions can be realized based on the cooperation of the optical sensors (41 and 43) with the transparent member 11. Moreover, in such a case, a plurality of light-transmitting holes is not required to be provided, and the structural stability and the richness of the functions of the terminal are considered. This is explained in detail below in connection with specific examples.

By way of example, the optical sensors (41 and 43) are sensors in the distance monitoring module. The distance from the target object outside the terminal to the side 42 can be monitored by the optical sensors (41 and 43).

By way of example, the optical sensors (41 and 43) are sensors in the fingerprint recognition module. Fingerprint characteristics of the target object placed at a preset position of the terminal can be identified by the optical sensors (41 and 43), and then specified functions such as unlocking, payment, photographing and the like are triggered.

It is understood that, in the present embodiment, the light-transmitting member 22 is made to cover the plurality of sensors (41 and 43) so that the normal use of the plurality of sensors (41 and 43) can be satisfied.

Other embodiments of the present disclosure will be apparent to those skilled in the art from consideration of the specification and practice of the present disclosure disclosed herein. The present application is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope of the present disclosure is defined by the appended claims.

It should be understood that the present disclosure is not limited to the precise structures that have been described above and shown in the drawings, and various modifications and changes can be made without departing from the scope thereof. The scope of the present disclosure is limited only by the appended claims.

## Claims

1. A terminal (4), comprising:
a screen frame (2) provided with a light-transmitting member (22),
wherein the light-transmitting member (22) partially absorbs or reflects light, such that a light flux passing through the light-transmitting member (22) is less than a light flux of incident light,
an absorption rate or a reflection rate for the incident light of the light-transmitting member (22) is greater than a transmission rate for the incident light,
the light-transmitting member (22) comprises: a light-transmitting shielding layer (222), partially reflecting or absorbing light; and two transparent substrates (221), bearing the light-transmitting shielding layer (222) and connected with the screen frame (2), wherein the light-transmitting shielding layer (222) is sandwiched inside two transparent substrates (221); and
an optical sensor (41) located below the light-transmitting member (22) in the screen frame (2), to allow light transmission while maintaining shielding properties,
wherein the terminal (4) comprises at least two optical sensors (41), and the light-transmitting member (22) covers light-sensing surfaces of the at least two optical sensors (41).

2. The terminal (4) of claim 1, wherein the terminal (4) further comprises:
a light transmitting side wall (42),
the light-transmitting member (22), provided inside the light transmitting side wall (42); and
an optical sensor (43), corresponding to the light-transmitting member (22) located at the light-transmitting side edge.

3. The terminal (4) of claim 1, wherein the optical sensor (41) selected from at least one of the following: a structured light module, an optical fingerprint recognition module, an optical distance monitoring module, and a camera module.

4. The terminal (4) of claim 1, wherein the light-transmitting member (22) is provided on an outer boundary of the screen frame (2).

5. The terminal (4) of claim 1, wherein the light-transmitting member (22) is provided in a light-transmitting region of the screen frame (2); and the light-transmitting region of the screen frame (2) is at least one of:
an opening region in the screen frame (2) covered by the light-transmitting member (22); or
a region made of a transparent light-transmitting material in the screen frame (2), wherein the light-transmitting member (22) is integrated with the region.

6. The terminal (4) of claim 1, wherein the light-transmitting member (22) is aligned with a region around the opening structure.

7. The terminal (4) of claim 1, wherein the light-transmitting member (22) is a peep-hole lens.

## Patentansprüche

1. Endgerät (4), das aufweist:
einen Bildschirmrahmen (2), der mit einem lichtdurchlässigen Element (22) versehen ist,
wobei das lichtdurchlässige Element (22) Licht teilweise absorbiert oder reflektiert, so dass ein Lichtfluss, der durch das lichtdurchlässige Element (22) hindurchgeht, geringer ist als ein Lichtfluss von einfallendem Licht,
wobei eine Absorptionsrate oder eine Reflexionsrate für das einfallende Licht des lichtdurchlässigen Elements (22) größer ist als eine Übertragungsrate für das einfallende Licht,
wobei das lichtdurchlässige Element (22) aufweist: eine lichtdurchlässige Abschirmungsschicht (222), die Licht teilweise reflektiert oder absorbiert; und zwei transparente Substrate (221), welche die lichtdurchlässige Abschirmungsschicht (222) tragen und mit dem Bildschirmrahmen (2) verbunden sind, wobei die lichtdurchlässige Abschirmungsschicht (222) sandwichartig innerhalb der beiden transparenten Substrate (221) angeordnet ist; und
einen optischen Sensor (41), der unterhalb des lichtdurchlässigen Elements (22) im Bildschirmrahmen (2) angeordnet ist, um den Lichtdurchgang zu ermöglichen und gleichzeitig die Abschirmungseigenschaften zu erhalten,
wobei das Endgerät (4) mindestens zwei optische Sensoren (41) aufweist und das lichtübertragende Element (22) die lichtsensierenden Oberflächen der mindestens zwei optischen Sensoren (41) abdeckt.

2. Endgerät (4) nach Anspruch 1, wobei das Endgerät (4) ferner aufweist:
eine lichtdurchlässige Seitenwand (42),
das lichtdurchlässige Element (22), das im Inneren der lichtdurchlässigen Seitenwand (42) vorgesehen ist; und
einen optischen Sensor (43), der dem lichtdurchlässigen Element (22) entspricht und sich an der lichtdurchlässigen Seitenkante befindet.

3. Endgerät (4) nach Anspruch 1, wobei der optische Sensor (41) aus mindestens einem der folgenden ausgewählt ist: einem strukturierten Lichtmodul, einem optischen Fingerabdruckerkennungsmodul, einem optischen Abstandsüberwachungsmodul und einem Kameramodul.

4. Endgerät (4) nach Anspruch 1, wobei das lichtdurchlässige Element (22) an einer äußeren Begrenzung des Bildschirmrahmens (2) vorgesehen ist.

5. Endgerät (4) nach Anspruch 1, wobei das lichtdurchlässige Element (22) in einem lichtdurchlässigen Bereich des Bildschirmrahmens (2) vorgesehen ist; und wobei der lichtdurchlässige Bereich des Bildschirmrahmens (2) mindestens einer der folgenden ist:
einen Öffnungsbereich im Bildschirmrahmen (2), der durch das lichtdurchlässige Element (22) abgedeckt ist; oder
einen Bereich aus einem transparenten lichtdurchlässigen Material in dem Bildschirmrahmen (2), wobei das lichtdurchlässige Element (22) in den Bereich integriert ist.

6. Endgerät (4) nach Anspruch 1, wobei das lichtdurchlässige Element (22) auf einen Bereich um die Öffnungsstruktur herum ausgerichtet ist.

7. Endgerät (4) nach Anspruch 1, wobei das lichtdurchlässige Element (22) eine Gucklochlinse ist.

## Revendications

1. Terminal (4), comprenant :
un cadre d'écran (2) pourvu d'un élément laissant passer la lumière (22),
dans lequel l'élément laissant passer la lumière (22) absorbe ou réfléchit partiellement la lumière, de sorte qu'un flux lumineux passant à travers l'élément laissant passer la lumière (22) est inférieur à un flux lumineux de lumière incidente,
un taux d'absorption ou un taux de réflexion de la lumière incidente de l'élément laissant passer la lumière (22) est supérieur à un taux de transmission de la lumière incidente,
l'élément laissant passer la lumière (22) comprend : une couche à effet écran laissant passer la lumière (222), réfléchissant ou absorbant partiellement la lumière ; et deux substrats transparents (221), portant la couche à effet écran laissant passer la lumière (222) et étant reliés au cadre d'écran (2), dans lequel la couche à effet écran laissant passer la lumière (222) est prise en sandwich à l'intérieur des deux substrats transparents (221) ; et
un capteur optique (41) situé sous l'élément laissant passer la lumière (22) dans le cadre d'écran (2), pour permettre une transmission de lumière tout en maintenant des propriétés d'effet écran,
dans lequel le terminal (4) comprend au moins deux capteurs optiques (41), et l'élément laissant passer la lumière (22) recouvre des surfaces de détection de lumière des au moins deux capteurs optiques (41).

2. Terminal (4) selon la revendication 1, dans lequel le terminal (4) comprend en outre :
une paroi latérale laissant passer la lumière (42),
l'élément laissant passer la lumière (22), disposé à l'intérieur de la paroi latérale laissant passer la lumière (42) ; et
un capteur optique (43), correspondant à l'élément laissant passer la lumière (22) situé au niveau du bord latéral laissant passer la lumière.

3. Terminal (4) selon la revendication 1, dans lequel le capteur optique (41) est sélectionné à partir d'au moins l'un des modules suivants parmi : un module de lumière structurée, un module optique de reconnaissance d'empreintes digitales, un module optique de surveillance de distance, et un module de caméra.

4. Terminal (4) selon la revendication 1, dans lequel l'élément laissant passer la lumière (22) est disposé sur une limite extérieure du cadre d'écran (2).

5. Terminal (4) selon la revendication 1, dans lequel l'élément laissant passer la lumière (22) est disposé dans une région laissant passer la lumière du cadre d'écran (2) ; et la région laissant passer la lumière du cadre d'écran (2) est au moins une région parmi :
une région d'ouverture dans le cadre d'écran (2) recouverte par l'élément laissant passer la lumière (22) ; ou
une région constituée d'un matériau transparent laissant passer la lumière dans le cadre d'écran (2), dans lequel l'élément laissant passer la lumière (22) est intégré dans la région.

6. Terminal (4) selon la revendication 1, dans lequel l'élément laissant passer la lumière (22) est aligné avec une région autour de la structure d'ouverture.

7. Terminal (4) selon la revendication 1, dans lequel l'élément laissant passer la lumière (22) est une lentille à œilleton.
